# EUROPÄISCHE PATENTSCHRIFT

(11) **EP 2 383 220 B1**
(45) Veröffentlichungstag und Bekanntmachung des Hinweises auf die Patenterteilung: **16.04.2014**
(21) Anmeldenummer: 11164301.1
(22) Anmeldetag: 29.04.2011
(51) Int. Cl.: B66F 9/075, B66F 9/20, B62D 51/04, B66F 17/00, B62D 51/00

(54) **Flurförderzeug mit Mitgängereinrichtung**
Industrial truck with operator device
Chariot de manutention doté d'un dispositif de commande

(30) Priorität: 29.04.2010 DE 102010028376
(43) Veröffentlichungstag der Anmeldung: 02.11.2011
(73) Patentinhaber: Jungheinrich Aktiengesellschaft, 22047 Hamburg (DE)
(72) Erfinder: Schöttke, Carsten, 85368, Moosburg (DE); Kollmannsberger, Otto, 85368, Moosburg (DE)
(74) Vertreter: Tiesmeyer, Johannes

(56) Entgegenhaltungen:
- WO-A1-99/24349
- DE-A1- 19 518 116
- DE-A1-102008 025 632
- US-A1- 2005 247 508

## Beschreibung

Die vorliegende Erfindung betrifft ein Flurförderzeug, insbesondere Stapler wie etwa Schmalgangstapler oder Kommissionierer, das mittels einer am Flurförderzeug angeordneten Steuereinrichtung wenigstens in einem Normalbetriebsmodus oder einem Mitgängerbetriebsmodus betrieben werden kann, umfassend eine insbesondere anhebbare Fahrerplattform für eine das Flurförderzeug bedienende Person und ein Lastaufnahmemittel zum Aufnehmen und Heben oder Senken von Lasten, insbesondere Paletten oder dergleichen, wobei die Fahrerplattform derart ausgestaltet ist, dass das Flurförderzeug mittels entsprechender der Plattform zugeordneter Bedienelemente im Normalbetriebsmodus durch die auf der Fahrerplattform befindliche Person bedienbar ist, und wobei dem Flurförderzeug eine Mitgängereinrichtung zugeordnet ist, an welcher mit der Steuereinrichtung kommunizierende Mitgängerbedienmittel vorgesehen sind, die im Mitgängerbetriebsmodus von der außerhalb der Plattform befindlichen Person bedienbar sind, wobei das wenigstens eine Mitgängerbedienmittel als Fahrbedienmittel für das Fahren des Flurförderzeugs und Hubbedienmittel für das Anheben bzw. Absenken des Lastaufnahmemittels umfassen.

Ein derartiges Flurförderzeug wird in der Bauweise eines Horizontalkommissionierers mit der Typbezeichnung ECE 220/225 von der Anmelderin vertrieben, wobei als Zusatzausstattung eine Mitgängereinrichtung im Bereich einer Rückenlehne eines Bedienpersonsitzes angeordnet ist, die das Vorwärts- bzw. Rückwärtsfahren des Flurförderzeugs ermöglicht sowie das Anheben bzw. Absenken des Lastaufnahmemittels.

Die Bedienung von derartigen Flurförderzeugen, insbesondere Kommissionierern, ist im sogenannten Mitgängerbetrieb insbesondere dann sinnvoll, wenn beispielsweise auf einer untersten Regalebene in einem Gang eines Materiallagers kommissioniert wird. Eine Bedienperson kann dabei, ohne in das Flurförderzeug einsteigen zu müssen, z. B. einen nächsten Lagerplatz einer Palette anfahren oder das Lastaufnahmemittel auf eine ergonomische Zusatzhubhöhe bringen. In der Regel handelt es sich bei solchen Fahr- bzw. Hubbewegungen um kurze Bewegungen, bei denen der sog. Rüstzeitanteil (die Zeit, die vergeht, wenn die Bedienperson in das Flurförderzeug einsteigt und dann wieder zurück zum Arbeitsplatz außerhalb des Flurförderzeugs geht) sehr groß ist verglichen mit der Zeit, die benötigt wird, um die eigentliche Bewegung des Flurförderzeugs bzw. des Lastaufnahmemittels durchzuführen. Die Fahrzeugbewegung bzw. Hubfunktionen sind im Mitgängerbetriebsmodus in der Regel gedrosselt bzw. begrenzt, um das Verletzungsrisiko zu minimieren.

Die vorstehend angesprochenen Ausführungsformen gestatten die Funktionen Fahren und/oder Heben bzw. Senken. Zum Korrigieren der Fahrtrichtung des Flurförderzeugs muss dieses allerdings von der Bedienperson betreten werden. Dies ist bei normalen Kommissionierarbeiten recht häufig erforderlich, da das Flurförderzeug selten exakt parallel zum Regal steht oder auch öfter über den Korridor zu einem gegenüberliegenden Regal gewechselt werden muss. Ein Flurförderzeug der Eingangs genannten Art, bei dem die Mitgängereinrichtung ferner ein als Lenkbedienmittel ausgebildetes Mitgängerbedienmittel umfasst, welches das Lenken des Flurförderzeugs im Mitgängerbetriebsmodus durch die außerhalb der Plattform befindliche Person ermöglicht, ist z.B. aus der US 2005/0247508 A1 bekannt.

Die DE 102008025632 offenbart ein Flurförderzeug gemäß dem Oberbegriff des Anspruchs 1.

Aufgabe der Erfindung ist es, ein gattungsgemäßes Flurförderzeug derart weiterzubilden, dass es in einer hohen Sicherheitsanforderungen genügender Weise im Mitgängerbetriebsmodus betrieben werden kann.

Hierzu wird vorgeschlagen, dass das Hubbedienmittel zum Bewirken von Hubbewegungen des Lastaufnahmemittels wenigstens drei Hubbedienelemente, nämlich ein Heben-Bedienelement und ein Senken-Bedienelement, die durch eine Hand einer Bedienperson betätigbar sind, sowie ein Sicherheitsbedienelement, das mittels der anderen Hand der Bedienperson betätigbar ist, umfasst. Hierzu wird weitergehend vorgeschlagen, dass die Steuereinrichtung derart ausgeführt ist, dass ein Heben oder Senken mittels des Heben-Bedienelements oder des Senken-Bedienelements im Mitgängerbetriebsmodus nur bei betätigtem Sicherheitsbedienelement ermöglicht ist.

Eine derartige Ausgestaltung der Hubbedienmittel ermöglicht eine Hubbewegung des Lastaufnahmemittels nur mit einer sog. Zweihandbindung, d. h. beide Hände der Bedienperson sind an vorbestimmten Stellen des Flurförderzeugs positioniert, so dass eine versehentliche Betätigung des Lastaufnahmemittels mit einer Hand verhindert ist. Diese Maßnahme erhöht die Sicherheit für die Bedienperson beim Anheben bzw. Absenken des Lastaufnahmemittels. Der mittels des Hubbedienmittels ermöglichte Hub des Lastaufnahmemittels ist vorzugsweise nur ein sog. Zusatzhub, welcher ein Absenken bzw. Anheben des Lastaufnahmemittels aus einer aktuellen Hubposition heraus um einen vorzugsweise einstellbaren Betrag ermöglicht, beispielsweise einen Zusatzhub von +/- 30 cm.

Die Ausgestaltung des Hubbedienmittels mit drei Bedienelementen, von denen das Sicherheitsbedienelement immer betätigt werden muss, um eine Hubbewegung des Lastaufnahmemittels zu erreichen, führt auch dazu, dass ein gleichzeitiges Fahren des Flurförderzeugs und Heben/Senken des Lastaufnahmemittels nicht möglich ist, da hierzu an drei Stellen des Flurförderzeugs Betätigungsaktionen erfolgen müssten, was für eine einzelne Bedienperson nicht möglich ist. Somit ist zur Erhöhung der Sicherheit für die Bedienperson das Bedienen des Lastaufnahmemittels und das Bedienen der Fahr- und Lenkfunktion voneinander getrennt.

Durch ein von einer außerhalb des Flurförderzeugs befindlichen Person betätigbares Lenkbedienmittel kann die Fahrtrichtung des Flurförderzeugs im Mitgängerbetriebsmodus verändert werden, so dass das Flurförderzeug parallel im Korridor zu den Regalen ausgerichtet werden kann bzw. die Korridorseite von einem zum gegenüberliegenden Regal gewechselt werden kann, ohne dass die Bedienperson dafür in das Flurförderzeug einsteigen und danach wieder aussteigen muss.

Weiterbildend wird vorgeschlagen, dass das Fahrbedienmittel mit dem Lenkbedienmittel kombiniert ist, vorzugsweise in Form eines Einhebelbedienelements. Ein solches Einhebelbedienelement kann insbesondere in Form eines Joysticks ausgeführt sein, wobei durch Betätigen des Joysticks nach vorne bzw. nach hinten die Vorwärts- bzw. Rückwärtsfahrbewegung des Flurförderzeugs ausgelöst wird und durch Verkippen des Joysticks in seitlichen Richtungen, insbesondere quer zur Vorwärts-/Rückwärtsrichtung das Einschlagen eines lenkbaren Rades oder mehrerer lenkbarer Räder des Flurförderzeugs bewirkt werden kann. Mittels einer solchen Einhebelbedienung wird eine einfache Verfahrbarkeit des Flurförderzeugs im Mitgängerbetriebsmodus ermöglicht, die intuitiv verständlich und bedienbar ist.

Weiterbildend wird ferner vorgeschlagen, dass die Steuereinrichtung derart ausgeführt ist, dass ein mittels des Lenkbedienmittels einstellbarer Lenkwinkel eines lenkbaren Rades, insbesondere des Antriebsrades, oder mehrerer lenkbarer Räder des Flurförderzeugs auf einen einstellbaren Winkel eingeschränkt ist, vorzugsweise auf einen Winkel kleiner oder gleich 20° bezogen auf eine Geradeausfahrrichtung. Beim Betätigen des Einhebelbedienelements, dessen Bewegung vorzugsweise über ein Kreuzpotentiometer erfasst und an die Steuereinrichtung übermittelt wird, wird bei bereits eingeschlagenem lenkbarem Rad dieses Rad zunächst in Geradeausstellung mit Lenkeinschlag null Grad gestellt, um eine Geradeausfahrt im Mitgängerbetrieb zu ermöglichen. Je nach seitlicher Betätigung des Einhebelbedienelements (Joysticks) erfolgt dann ein Lenkeinschlag bis zum für den Mitgängerbetriebsmodus eingestellten Maximaleinschlag von vorzugsweise kleiner oder gleich 20°.

Ferner kann die Steuereinrichtung derart ausgeführt sein, dass die im Mitgängerbetriebsmodus durch Betätigung des Fahrbedienmittels erreichbare Geschwindigkeit des Flurförderzeugs auf einen einstellbaren maximalen Wert eingeschränkt ist, insbesondere auf kleiner 4 km/h, vorzugsweise auf kleiner oder gleich 2,5 km/h. Die Beschränkung der Geschwindigkeit des Flurförderzeugs im Mitgängerbetriebsmodus dient insbesondere der Vermeidung von Unfällen und ermöglicht es der Bedienperson, ohne großen Aufwand neben dem Flurförderzeug herzugehen und dabei das Fahrbedienmittel weiter in der Hand zu halten.

Vorzugsweise ist die Steuereinrichtung derart ausgeführt, dass der Mitgängerbetriebsmodus erst nach Betätigung von wenigstens einem Umschaltelement eingeschaltet wird und der Mitgängerbetriebsmodus bei nicht betätigten Mitgängerbedienelementen nach einer einstellbaren Mitgängerbetriebszeit beendet wird, wobei die Mitgängerbetriebszeit vorzugsweise kleiner oder gleich 60 Sekunden beträgt. Durch Betätigung eines Umschaltelements wird eine Freigabe für den Mitgängerbetrieb erteilt, wobei der Mitgängerbetrieb zeitbegrenzt beibehalten wird. Diese Selbsthaltung des Mitgängerbetriebs kann bis zu 60 Sekunden betragen, wobei es bevorzugt ist, wenn eine kürzere Selbsthaltung des Mitgängerbetriebs vorgesehen ist, beispielsweise von etwa 5 bis 20 Sekunden. Wenn die Mitgängerbetriebszeit nach einem ersten Betätigen des Umschaltelements verstreicht, ohne dass Mitgängerbedienelemente in dieser Zeit betätigt werden, muss der Mitgängerbetriebsmodus durch erneutes Betätigen des Umschaltelements erneut aktiviert werden.

Besonders vorteilhaft ist es, wenn das wenigstens eine Umschaltelement einem Mitgängerbedienmittel zugeordnet ist, vorzugsweise dem Hubbedienmittel. Besonders bevorzugt ist es, wenn das Umschalten in den Mitgängerbetriebsmodus durch Betätigen des Heben-Bedienelements oder des Senken-Bedienelements oder des Sicherheitsbedienelements erfolgen kann, wobei die erstmalige Betätigung eines dieser Bedienelemente nur das Umschalten in den Mitgängerbetriebsmodus auslöst und erst danach ein gemeinsames Betätigen des Heben-Bedienelements bzw. Senken-Bedienelements und des Sicherheitsbedienelements zu einer Veränderung der Hubhöhe des Lastaufnahmemittels führt.

Die Mitgängereinrichtung kann eine im Bereich der Fahrerplattform angeordnete Konsole umfassen, an welcher die Mitgängerbedienelemente vorgesehen sind. Eine derartige Konsole kann mit dem Flurförderzeug fest oder lösbar verbunden sein und die Mitgängerbedienelemente können drahtgebunden oder drahtlos mit der Steuereinrichtung des Flurförderzeugs verbunden sein. Vorzugsweise ist auf jeder Seite des Flurförderzeugs bzw. der Fahrerplattform eine Konsole mit Mitgängereinrichtung vorgesehen, so dass eine Bedienung des Flurförderzeugs im Mitgängerbetriebsmodus beidseitig des Flurförderzeugs durch eine außerhalb stehende Bedienperson ermöglicht ist.

Bei einem Flurförderzeug, das als Kommissionierer mit anhebbarer Fahrerplattform ausgebildet ist, können an der Fahrerplattform seitliche Sicherheitsschranken vorgesehen sein, die im Normalbetriebsmodus mit auf der Fahrerplattform befindlicher Bedienperson geschlossen sein müssen und die im Mitgängerbetriebsmodus mit außerhalb der Fahrerplattform befindlicher Bedienperson geöffnet sein müssen, um das Flurförderzeug im betreffenden Betriebsmodus betreiben zu können. Das Öffnen der seitlichen Sicherheitsschranken kann somit eine weitere Bedingung für das Freigeben des Mitgängerbetriebsmodus darstellen. Kombiniert mit dem bereits oben Ausgeführten kann der Mitgängerbetriebsmodus wie folgt freigegeben werden: Fahrerplatz auf der Fahrerplattform verlassen, Seitenschranken öffnen, ein Bedienelement des Hubbedienmittels betätigen, um den Mitgängerbetriebsmodus freizugeben. Bei geschlossenen Seitenschranken ist eine Betätigung von Mitgängerbedienmitteln vorzugsweise wirkungslos.

In diesem Zusammenhang wird ferner vorgeschlagen, dass die Steuereinrichtung derart eingerichtet ist, dass der Mitgängerbetrieb nur bei abgesenkter Fahrerplattform ermöglicht ist, vorzugsweise auf eine Fahrerplattformhubhöhe von kleiner oder gleich 200 mm. Hierdurch soll verhindert werden, dass die Bedienperson aus einer großen Höhe die Fahrerplattform verlässt, um im Mitgängerbetriebsmodus mit dem Flurförderzeug zu arbeiten. Bei geringer Höhe der Fahrerplattform ist das Risiko von Unfällen beim Ein- bzw. Aussteigen stark vermindert. Ferner kann bei einer zu hoch über dem Untergrund angehobenen Fahrerplattform die Betätigung von Mitgängerbedienmitteln schwierig oder unmöglich sein.

Gemäß einem anderen nicht beanspruchten Aspekt der Erfindung betrifft die Offenbarung eine Mitgängereinrichtung für ein Flurförderzeug, umfassend wenigstens ein mit einer Steuereinrichtung des Flurförderzeugs verbindbares Mitgängerbedienmittel, wobei das wenigstens eine Mitgängerbedienmittel von einer außerhalb des Flurförderzeugs befindlichen Bedienperson betätigbar ist und als Fahrbedienmittel für das Fahren des Flurförderzeugs und/oder als Hubbedienmittel für das Anheben bzw. Absenken eines Lastaufnahmemittels des Flurförderzeugs ausgebildet ist, wobei erfindungsgemäß vorgeschlagen wird, dass die Mitgängereinrichtung ferner ein als Lenkbedienmittel ausgebildetes Mitgängerbedienmittel umfasst, welches das Lenken des Flurförderzeugs durch die außerhalb der Plattform befindliche Bedienperson ermöglicht.

Bei einer solchen Mitgängereinrichtung wird ferner vorgeschlagen, dass das bzw. die Mitgängerbedienmittel an einer am Flurförderzeug fest oder lösbar anbringbaren Konsole vorgesehen sind. Ferner können die Mitgängerbedienmittel derart ausgeführt sein, dass sie drahtgebunden oder drahtlos mit der Steuereinrichtung in Kommunikationsverbindung gebracht werden können.

Eine solche Mitgängereinrichtung vorzugsweise samt der Konsole kann auch als Nachrüstung an einem bestehenden Flurförderzeug vorgesehen sein, wobei zur Ermöglichung eines Mitgängerbetriebsmodus nur die Konsole am entsprechenden Flurförderzeug angebracht und die entsprechenden Kommunikationsverbindungen zwischen Mitgängerbedienmitteln und Steuereinrichtung hergestellt werden müssen. Gegebenenfalls ist natürlich auch eine Aktualisierung der Programme der Steuereinrichtung erforderlich.

Die Erfindung wird nachfolgend unter Bezugnahme auf die anliegenden Figuren beispielhaft und nicht einschränkend anhand einer Ausführungsform beschrieben werden.
- Fig. 1: zeigt als Beispiel für ein Flurförderzeug einen Kommissionierer mit einer Ausführungsform einer erfindungsgemäßen Mitgängereinrichtung in schematischer Perspektivdarstellung.
- Fig. 2: zeigt eine vergrößerte perspektivische Teildarstellung des in Fig. 1 strichpunktiert umrandeten Bereichs.
- Fig. 3: zeigt eine perspektivische Darstellung einer Konsole mit Mitgängereinrichtung.
- Fig. 4: zeigt eine Vergrößerung des oberen Teils der Konsole mit Mitgängereinrichtung entsprechend dem strichpunktiert umrandeten Bereich der Fig. 3.

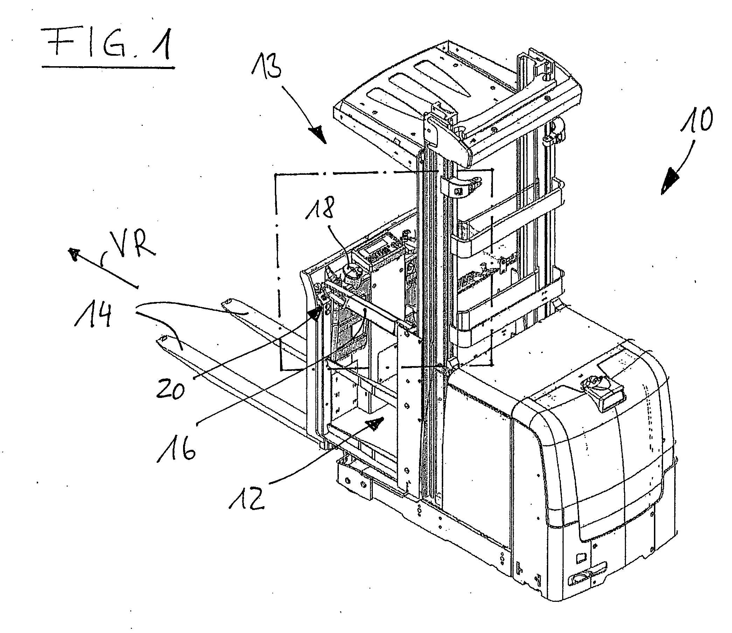

Fig. 1 zeigt in schematischer Perspektivdarstellung ein Flurförderzeug in Form eines Kommissionierers 10 mit einer Fahrerplattform 12 und einem Lastaufnahmemittel 14. Die Fahrerplattform wird seitlich von klappbaren Sicherheitsschranken 16 begrenzt, welche aus der hier dargestellten heruntergeklappten Stellung nach oben verschwenkt werden können in eine im Wesentlichen vertikale Position. Der Fahrerplattform 12 sind verschiedene Bedienelemente für den Betrieb des Flurförderzeugs 10 zugeordnet. Erkennbar ist beispielsweise ein kleines Lenkrad 18.

Das in Fig. 1 dargestellte Flurförderzeug 10 kann wenigstens in einem sog. Normalbetriebsmodus und einem Mitgängerbetriebsmodus betrieben werden. Selbstverständlich sind auch weitere Betriebsmodi denkbar, die aber nicht weiter beschrieben werden. Im Normalbetriebsmodus befindet sich eine Bedienperson auf der Fahrerplattform 12 des Flurförderzeugs 10 und bedient die der Fahrerplattform 12 zugeordneten Bedienelemente, wie etwa das Lenkrad 18. Im Normalbetriebsmodus sind die Sicherheitsschranken 16 vorzugsweise geschlossen, um zu verhindern, dass die Bedienperson das Flurförderzeug während des Fahrens oder bei angehobener Fahrerplattform 12 verlassen kann.

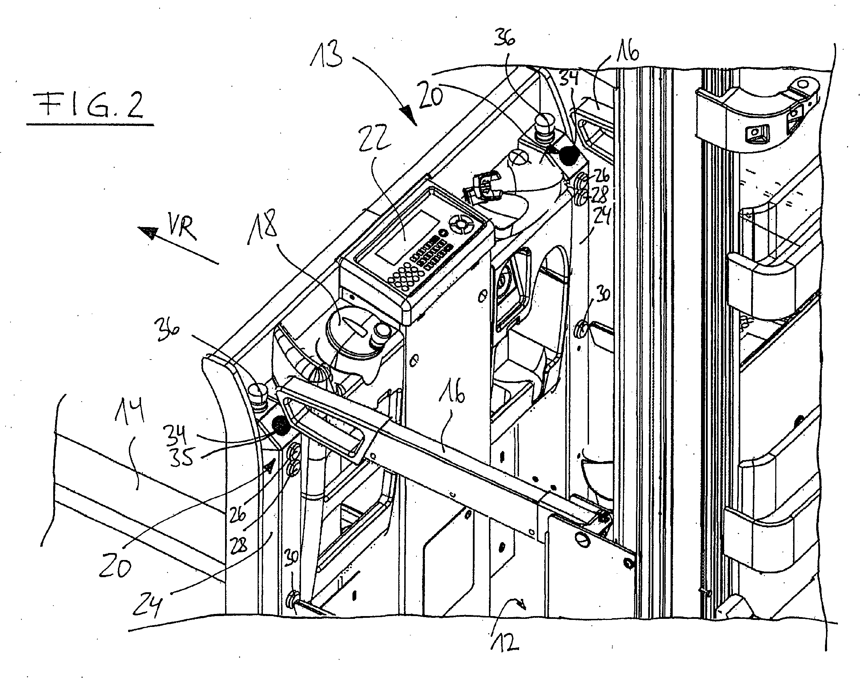

Im Mitgängerbetriebsmodus können die Sicherheitsschranken 16 nach oben verschwenkt werden und die Bedienperson kann sich außerhalb der Fahrerplattform 12 befinden, aber trotzdem Betriebsfunktionen des Flurförderzeugs 10 bedienen. Die Bedienung erfolgt dabei über eine bei 20 angedeutete Mitgängereinrichtung, welche nachfolgend unter Bezugnahme auf die Fig. 2 bis 4 beschrieben wird.

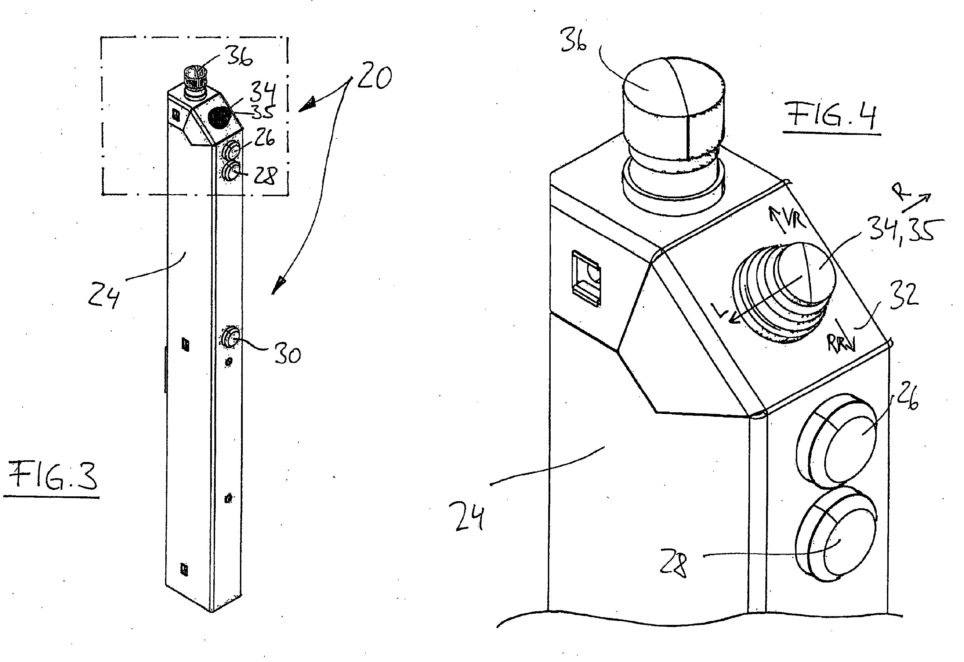

Fig. 2 zeigt eine vergrößerte perspektivische Darstellung entsprechend dem strichpunktiert umrandeten Bereich der Fig. 1. Ersichtlich sind das Lastaufnahmemittel 14 (eine der Lastgabeln), die Sicherheitsschranken 16, welche beidseitig der Fahrerplattform angeordnet sind, und das Lenkrad 18. Ferner ist ein Bediencomputer 22 ersichtlich, der von einer auf der Fahrerplattform 12 befindlichen Bedienperson bedient werden kann. Bezogen auf eine Vorwärtsfahrrichtung VR sind in den vorderen Eckbereichen des Fahrerstands 13 Mitgängereinrichtungen 20 angeordnet, die von einer Bedienperson betätigt werden können, wenn sie außerhalb der Fahrerplattform 12 steht. Die Mitgängereinrichtung ist an einer Konsole 24 vorgesehen und umfasst verschiedene Mitgängerbedienmittel, die nachfolgend unter Bezugnahme auf die Fig. 3 und 4 beschrieben werden.

Um das Lastaufnahmemittel 14 in seiner Hubhöhe verändern zu können, umfasst die Mitgängereinrichtung ein Hubbedienmittel mit einem Heben-Bedienelement bzw. -Druckknopf 26, einem Senken-Bedienelement bzw. -Druckknopf 28 und einem Sicherheitsbedienelement bzw. -druckknopf 30. Wenn das Flurförderzeug 10 im Mitgängerbetriebsmodus betrieben wird, kann durch gleichzeitiges Drücken auf den Druckknopf 30 und einen der Druckknöpfe 26 bzw. 28 ein Heben oder Senken des Lastaufnahmemittels 14 bewirkt werden. Das Heben oder Senken des Lastaufnahmemittels 14 ist nur ermöglicht, wenn der Sicherheitsdruckknopf 30 gleichzeitig gedrückt wird bei Betätigung der Druckknöpfe 26 bzw. 28, so dass eine Bedienperson beide Hände an vorbestimmte Positionen des Flurförderzeugs halten muss beim Verändern der Hubhöhe des Lastaufnahmemittels 14.

Oberhalb des Druckknopfs 26 befindet sich auf einem abgeschrägten Abschnitt 32 der Konsole 24 ein Fahrbedienmittel 34, das in der Art eines Joysticks vorzugsweise mit Kreuzpotentiometer ausgeführt ist. Das Fahrbedienmittel 34 kann sowohl in Vorwärtsrichtung VR als auch in Rückwärtsrichtung RR bewegt werden, um den Antrieb des Flurförderzeugs 10 entsprechend anzusteuern und eine Bewegung des Flurförderzeugs in die entsprechende Richtung zu bewirken. Ferner ist in das Fahrbedienmittel 34 ein Lenkbedienmittel 35 integriert, das es ermöglicht, durch Verschwenken nach links L bzw. rechts R bezogen auf eine Vorwärtsrichtung VR einen Lenkausschlag an einem lenkbaren Rad des Flurförderzeugs 10 hervorzurufen, so dass das Flurförderzeug sich nach links bzw. rechts bewegt. Es ist somit möglich, dass das Flurförderzeug vorwärts oder rückwärts und nach links bzw. rechts bewegt wird, ohne dass hierzu das Lenkrad 18 (Fig. 2) betätigt werden muss. Die Fahrsteuerung erfolgt einzig über das Fahr-/Lenkbedienelement 34, 35 mittels einer Hand der Bedienperson.

Oberhalb des Fahrbedienmittels 34 ist ein einrastbarer Not-Aus-Schalter 36 vorgesehen, der beim Betätigen alle Funktionen des Flurförderzeugs 10 beendet.

Die Konsole 24, auf welcher die Bedienelemente 26, 28, 30, 34 und 36 angeordnet sind, ist im vorliegenden Beispiel fest mit der Fahrerplattform 12 verbunden. Es ist allerdings auch denkbar, dass eine derartige Konsole lösbar mit dem Flurförderzeug 10 verbunden ist.

Die verschiedenen Bedienelemente 26, 28, 30, 34 und 36 stehen über allgemein bekannte elektrische oder drahtlose Verbindungen mit einer hier nicht näher dargestellten Steuereinheit des Flurförderzeugs in Verbindung, welche die durch Betätigung der verschiedenen Bedienelemente angeforderten Funktionen auslöst.

Der Mitgängerbetriebsmodus kann gemäß dem vorgestellten Ausführungsbeispiel wie folgt beschrieben werden:

Die Funktion des Mitgängerbetriebsmodus ist vorzugsweise nur bei abgesenkter Fahrerplattform 12 möglich, wobei sich die Fahrerplattform 12 nicht höher als 200 mm über dem Untergrund befinden sollte. Wenn die Bedienperson den Fahrerplatz verlässt und die Seitenschranken 16 öffnet, kann durch Betätigen einer der Druckknöpfe 26, 28 oder 30 (als Umschaltelement) der Mitgängerbetriebsmodus freigeschaltet werden. Es ist bevorzugt, wenn der Mitgängerbetriebsmodus nach seiner Freigabe während einer begrenzten Zeitdauer beibehalten wird. Die Zeitdauer für das Beibehalten des Mitgängerbetriebsmodus kann bis zu 60 Sekunden betragen. Erfolgt während dieser Zeit keine weitere Betätigung der Druckknöpfe 26, 28 und 30 bzw. des Fahr-/Lenkbedienmittels 34, 35, so wird der Mitgängerbetriebsmodus automatisch beendet und muss durch erneutes Betätigen eines Druckknopfes 26, 28 oder 30 wieder freigegeben werden.

Durch Betätigen des Fahr- und Lenkbedienmittels 34, 35 in die gewünschte Fahrtrichtung VR bzw. RR wird bei bereits eingelenkter Lenkung das eingeschlagene Rad, insbesondere Antriebsrad des Flurförderzeugs 10, in Geradeausstellung mit Lenkeinschlag null Grad eingestellt, und das Flurförderzeug kann dann geregelt bis zu einer maximalen Geschwindigkeit von bevorzugt 2,5 km/h vorwärts oder rückwärts verfahren werden. Durch seitliches Betätigen des Lenkbedienmittels 34 kann während der Fahrt ein Lenkausschlag von bis zu +/- 20° erreicht werden.

Durch gleichzeitiges Drücken der Druckknöpfe 26 und 30 bzw. 28 und 30 wird eine sog. Zweihandbindung erreicht und es erfolgt ein Anheben bzw. Absenken des Lastaufnahmemittels 14 mit reduzierter Geschwindigkeit.

Die vorgestellte Konfiguration der Mitgängereinrichtung mit der entsprechenden Anordnung der zugehörigen Bedienelemente 26, 28, 30, 34 und 36 ermöglicht nur das Fahren und Lenken gleichzeitig, jedoch nicht das Fahren oder Lenken und das Betätigen der Hydraulik für das Anheben bzw. Absenken des Lastaufnahmemittels 14.

Die in Fig. 3 dargestellte Konsole 24 mit daran angeordneter Mitgängereinrichtung kann als separates Bauteil für ein Flurförderzeug 10 vorbereitet werden und auch als Ersatzteil bzw. Nachrüstbauteil für Flurförderzeuge vorgesehen werden. Die hier dargestellte Formgebung für die Konsole 24 ist rein exemplarisch und die Konsole 24 kann beliebige, insbesondere den Platzverhältnissen an einem entsprechenden Flurförderzeug angepasste Ausgestaltungen annehmen.

Der Vollständigkeit halber wird noch darauf hingewiesen, dass die nicht dargestellte Steuereinheit auch die Position der Sicherheitsschranken 16 überwachen kann und es nicht möglich ist, den Mitgängerbetriebsmodus einzuschalten, wenn die Sicherheitsschranken 16 heruntergeklappt sind (Fig. 2). Ferner ist es zum Freigeben des Mitgängerbetriebsmodus erforderlich, dass die Sicherheitsschranken 16 geöffnet sind und den Zugang zur Fahrerplattform freigeben. Die Überwachung des Zustands der Sicherheitsschranken 16 stellt allerdings nur eine optionale Weiterbildung dar, da eine Mitgängereinrichtung mit Lenkbedienmittel auch für Flurförderzeuge ohne Sicherheitsschranken vorgesehen werden kann.

## Patentansprüche

1. Flurförderzeug, insbesondere Stapler wie etwa Schmalgangstapler oder Kommissionierer (10), das mittels einer am Flurförderzeug angeordneten Steuereinrichtung wenigstens in einem Normalbetriebsmodus oder einem Mitgängerbetriebsmodus betrieben werden kann, umfassend eine insbesondere anhebbare Fahrerplattform (12) für eine das Flurförderzeug (10) bedienende Person und ein Lastaufnahmemittel (14) zum Aufnehmen und Heben oder Senken von Lasten, insbesondere Paletten oder dergleichen, wobei die Fahrerplattform (12) derart ausgestaltet ist, dass das Flurförderzeug (10) mittels entsprechender der Plattform (12) zugeordneter Bedienelemente (18) im Normalbetriebsmodus durch die auf der Fahrerplattform (12) befindliche Person bedienbar ist, und wobei dem Flurförderzeug (10) eine Mitgängereinrichtung (20) zugeordnet ist, an welcher mit der Steuereinrichtung kommunizierende Mitgängerbedienmittel (26, 28, 30, 34, 36) vorgesehen sind, die im Mitgängerbetriebsmodus von der außerhalb der Plattform befindlichen Person bedienbar sind, wobei die Mitgängerbedienmittel (26, 28, 30, 34, 36) Fahrbedienmittel (34) für das Fahren des Flurförderzeugs (12) und Hubbedienmittel (26, 28, 30) für das Anheben bzw. Absenken des Lastaufnahmemittels (14) umfassen,
wobei die Mitgängereinrichtung ferner ein als Lenkbedienmittel (35) ausgebildetes Mitgängerbedienmittel umfasst, welches das Lenken des Flurförderzeugs (10) im Mitgängerbetriebsmodus durch die außerhalb der Plattform befindliche Person ermöglicht, **dadurch gekennzeichnet dass** das Hubbedienmittel zum Bewirken von Hubbewegungen des Lastaufnahmemittels (14) ein Heben-Bedienelement (26) und ein Senken-Bedienelement (28), die durch eine Hand einer Bedienperson betätigbar sind, sowie ein Sicherheitsbedienelement (30), das mittels der anderen Hand der Bedienperson betätigbar ist, umfasst, wobei die Steuereinrichtung derart ausgeführt ist, dass ein Heben oder Senken mittels des Heben-Bedienelements (26) oder des Senken-Bedienelements (28) im Mitgängerbetriebsmodus nur bei betätigtem Sicherheitsbedienelement (30) ermöglicht ist.

2. Flurförderzeug nach Anspruch 1, **dadurch gekennzeichnet, dass** das Fahrbedienmittel (34) mit dem Lenkbedienmittel (35) kombiniert ist, vorzugsweise in Form eines Einhebelbedienelements.

3. Flurförderzeug nach einem der vorhergehenden Ansprüche, **dadurch gekennzeichnet, dass** die Steuereinrichtung derart ausgeführt ist, dass ein mittels des Lenkbedienmittels (35) einstellbarer Lenkwinkel eines lenkbaren Rades oder mehrerer lenkbarer Räder des Flurförderzeugs (10) auf einen einstellbaren Winkel eingeschränkt ist, vorzugsweise auf einen Winkel kleiner oder gleich 20° bezogen auf eine Geradeausfahrrichtung.

4. Flurförderzeug nach einem der vorhergehenden Ansprüche, **dadurch gekennzeichnet, dass** die Steuereinrichtung derart ausgeführt ist, dass die im Mitgängerbetriebsmodus durch Betätigung des Fahrbedienmittels (34) erreichbare Geschwindigkeit des Flurförderzeugs (10) auf einen einstellbaren maximalen Wert eingeschränkt ist, insbesondere auf kleiner 4 km/h, vorzugsweise auf kleiner oder gleich 2,5 km/h.

5. Flurförderzeug nach einem der vorhergehenden Ansprüche, **dadurch gekennzeichnet, dass** die Steuereinrichtung derart ausgeführt ist, dass der Mitgängerbetriebsmodus erst nach Betätigung von wenigstens einem Umschaltelement (26, 28, 30) eingeschaltet wird und der Mitgängerbetriebsmodus bei nicht betätigten Mitgängerbedienelementen (26, 28, 30, 34, 35, 36) nach einer einstellbaren Mitgängerbetriebszeit beendet wird, wobei die Mitgängerbetriebszeit vorzugsweise kleiner oder gleich 60 Sekunden beträgt.

6. Flurförderzeug nach Anspruch 5, **dadurch gekennzeichnet, dass** das Umschaltelement einem Mitgängerbedienmittel zugeordnet ist, vorzugsweise dem Hubbedienmittel (26, 28, 30).

7. Flurförderzeug nach einem der vorhergehenden Ansprüche, **dadurch gekennzeichnet, dass** die Mitgängereinrichtung (20) eine im Bereich der Fahrerplattform (12) angeordnete Konsole (24) umfasst, an welcher die Mitgängerbedienelemente (26, 28, 30, 34, 35, 36) vorgesehen sind.

8. Flurförderzeug nach Anspruch 7, **dadurch gekennzeichnet, dass** auf jeder Seite des Flurförderzeugs (10) bzw. der Fahrerplattform (12) eine Konsole (24) mit Mitgängereinrichtung (20) vorgesehen ist.

9. Flurförderzeug nach einem der vorhergehenden Ansprüche, **dadurch gekennzeichnet, dass** an der Fahrerplattform (12) seitliche Sicherheitsschranken (16) vorgesehen sind, die im Normalbetriebsmodus mit auf der Fahrerplattform (12) befindlicher Bedienperson geschlossen sein müssen und die im Mitgängerbetriebsmodus mit außerhalb der Fahrerplattform (12) befindlicher Bedienperson geöffnet sein müssen, um das Flurförderzeug (10) im betreffenden Betriebsmodus betreiben zu können.

10. Flurförderzeug nach Anspruch 9, **dadurch gekennzeichnet, dass** die Steuereinrichtung derart eingerichtet ist, dass der Mitgängerbetriebsmodus nur bei abgesenkter Fahrerplattform (12) ermöglicht ist, vorzugsweise auf eine Fahrerplattformhubhöhe von kleiner oder gleich 200 mm.

## Claims

1. Fork-lift truck, more particularly a stacker such as a narrow-aisle stacker or order picker (10), which can be operated at least in a normal operating mode or in a pedestrian-operated mode by means of a control device arranged on said fork-lift truck, comprising a driver platform (12) which can in particular be lifted for a person operating the fork-lift truck (10) and a load receiving means (14) for receiving and lifting or lowering loads, in particular pallets or the like, the driver platform (12) being configured such that the fork-lift truck (10) can be operated in the normal operating mode by the person on the driver platform (12) by means of corresponding operational controls (18) assigned to the platform (12), and a pedestrian device (20) being associated with the fork-lift truck (10), on which device pedestrian control means (26, 28, 30, 34, 36), which communicate with the control device and, in the pedestrian-operated mode, can be operated by the person outside the platform, are provided, the pedestrian control means (26, 28, 30, 34, 36) comprising driving control means (34) for driving the fork-lift truck (12) and lifting control means (26, 28, 30) for lifting or lowering the load receiving means (14),
the pedestrian device further comprising a pedestrian control means in the form of steering control means (35) which enables the fork-lift truck (10) to be steered when in the pedestrian-operated mode by a person outside the platform, **characterised in that** the lifting control means comprises a lifting operational control (26) and a lowering operational control (28) which can be actuated by one hand of an operator in order to bring about lifting movements of the load receiving means (14), and a safety operational control (30) which can be actuated by the other hand of the operator, the control device being configured such that in the pedestrian-operated mode, lifting or lowering is made possible by means of the lifting operational control (26) or the lowering operational control (28) only when the safety operational control (30) is actuated.

2. Fork-lift truck according to claim 1, **characterised in that** the driving control means (34) is combined with the steering control means (35), preferably in the form of a single-lever operational control.

3. Fork-lift truck according to any of the preceding claims, **characterised in that** the control device is configured in such a way that a steering angle, which can be adjusted by means of the steering control means (35), of a steerable wheel or a plurality of steerable wheels of the fork-lift truck (10) is limited to an adjustable angle, preferably to an angle smaller than or equal to 20°, with respect to a straight driving direction.

4. Fork-lift truck according to any of the preceding claims, **characterised in that** the control device is configured in such a way that the speed of the fork-lift truck (10) which can be reached by actuating the driving control means (34) in the pedestrian-operated mode is limited to an adjustable maximum value, more particularly to less than 4 km/h, preferably to less than or equal to 2.5 km/h.

5. Fork-lift truck according to any of the preceding claims, **characterised in that** the control device is configured in such a way that the pedestrian-operated mode is only switched on after at least one switching element (26, 28, 30) is actuated and, in the case of pedestrian operational controls (26, 28, 30, 34, 35, 36) not being actuated, the pedestrian-operated mode is terminated after an adjustable pedestrian operating time, the pedestrian operating time preferably being less than or equal to 60 seconds.

6. Fork-lift truck according to claim 5, **characterised in that** the switching element is associated with a pedestrian control means, preferably with the lifting control means (26, 28, 30).

7. Fork-lift truck according to any of the preceding claims, **characterised in that** the pedestrian device (20) comprises a control panel (24) arranged in the region of the driver platform (12), on which panel the pedestrian operational controls (26, 28, 30, 34, 35, 36) are arranged.

8. Fork-lift truck according to claim 7, **characterised in that** a control panel (24) comprising a pedestrian device (20) is provided on either side of the fork-lift truck (10) or the driver platform (12).

9. Fork-lift truck according to any of the preceding claims, **characterised in that** lateral safety barriers (16) are provided on the driver platform (12) which must be closed in the normal operating mode when the operator is on the driver platform (12) and must be opened in pedestrian-operated mode when the operator is outside the driver platform (12), in order to be able to operate the fork-lift truck (10) in the relevant operating mode.

10. Fork-lift truck according to claim 9, **characterised in that** the control device is equipped so that the pedestrian-operated mode is possible only when the driver platform (12) is lowered, preferably at a lift height of lift of the driver platform of less than or equal to 200 mm.

## Revendications

1. Chariot de manutention, en particulier chariot élévateur comme par exemple chariot élévateur pour allée étroite ou préparateur de commande (10), qui peut être utilisé au moyen d'un dispositif de commande installé sur le chariot de manutention au moins dans un mode d'utilisation normal ou un mode d'utilisation accompagné, comprenant une plate-forme de conducteur (12) en particulier montante pour une personne conduisant le chariot de manutention (10) et un moyen de prise de charges (14) pour prendre et lever ou descendre des charges, en particulier des palettes ou analogues, dans lequel la plate-forme de conducteur (12) est configurée de telle manière que le chariot de manutention (10) puisse être conduit en mode d'utilisation normal par la personne se trouvant sur la plate-forme de conducteur (12) au moyen d'éléments de conduite correspondants (18) associés à la plate-forme (12), et dans lequel un dispositif d'accompagnement (20) est associé au chariot de manutention (10), sur lequel il est prévu des moyens de conduite accompagnée (26, 28, 30, 34, 36) communiquant avec le dispositif de commande, qui peuvent être commandés en mode de conduite accompagné par la personne se trouvant à l'extérieur de la plate-forme, dans lequel les moyens de conduite accompagnée (26, 28, 30, 34, 36) comprennent des moyens de conduite de roulage (34) pour le roulage du chariot de manutention (10) et des moyens de commande de levage (26, 28, 30) pour la montée ou la descente du moyen de prise de charges (14),
dans lequel le dispositif d'accompagnement comprend en outre un moyen de conduite accompagnée sous la forme d'un moyen de pilotage (35), qui permet le pilotage du chariot de manutention (10) en mode d'utilisation accompagné par la personne se trouvant à l'extérieur de la plate-forme, **caractérisé en ce que** le moyen de commande de levage comprend, pour produire des mouvements de levage du moyen de prise de charges (14), un élément de commande de montée (26) et un élément de commande de descente (28), qui peuvent être actionnés par une main d'un conducteur, ainsi qu'un élément de commande de sécurité (30), qui peut être actionné par l'autre main du conducteur, dans lequel le dispositif de commande est réalisé d'une manière telle qu'une montée ou une descente ne puisse être effectuée, au moyen de l'élément de commande de montée (26) ou de l'élément de commande de descente (28) dans le mode d'utilisation accompagné, que lorsque l'élément de commande de sécurité (30) est actionné.

2. Chariot de manutention selon la revendication 1, **caractérisé en ce que** le moyen de commande de roulage (34) est combiné avec le moyen de pilotage (35), de préférence sous la forme d'un élément de commande à levier unique.

3. Chariot de manutention selon l'une quelconque des revendications précédentes, **caractérisé en ce que** le dispositif de commande est réalisé d'une manière telle qu'un angle de braquage d'une roue directrice ou de plusieurs roues directrices du chariot de manutention (10), réglable au moyen de l'élément de pilotage (35), soit limité à un angle réglable, de préférence à un angle inférieur ou égal à 20° par rapport à une direction de roulage en ligne droite.

4. Chariot de manutention selon l'une quelconque des revendications précédentes, **caractérisé en ce que** le dispositif de commande est réalisé d'une manière telle que la vitesse du chariot de manutention (10), qui peut être atteinte en mode d'utilisation accompagné par l'actionnement du moyen de commande de roulage (34), soit limitée à une valeur maximale réglable, en particulier inférieure à 4 km/h, de préférence inférieure ou égale à 2,5 km/h.

5. Chariot de manutention selon l'une quelconque des revendications précédentes, **caractérisé en ce que** le dispositif de commande est réalisé d'une matière telle que le mode d'utilisation accompagné ne puisse être enclenché qu'après l'actionnement d'au moins un élément de commutation (26, 28, 30) et le mode d'utilisation accompagné est terminé après un temps de conduite accompagnée réglable lorsque les éléments de conduite accompagnée (26, 28, 30, 34, 35, 36) ne sont pas actionnés, dans lequel le temps de conduite accompagnée est de préférence inférieur ou égal à 60 secondes.

6. Chariot de manutention selon la revendication 5, **caractérisé en ce que** l'élément de commutation est associé à un moyen de conduite accompagnée, de préférence au moyen de commande de levage (26, 28, 30).

7. Chariot de manutention selon l'une quelconque des revendications précédentes, **caractérisé en ce que** le dispositif d'accompagnement (20) comprend une console (24) disposée dans la région de la plate-forme de conducteur (12), sur laquelle les éléments de conduite accompagnée (26, 28, 30, 34, 35, 36) sont prévus.

8. Chariot de manutention selon la revendication 7, **caractérisé en ce qu'**il est prévu sur chaque côté du chariot de manutention (10) ou de la plate-forme de conducteur (12) une console (24) avec un dispositif d'accompagnement (20).

9. Chariot de manutention selon l'une quelconque des revendications précédentes, **caractérisé en ce qu'**il est prévu sur la plate-forme de conducteur (12) des barrières de sécurité latérales (16), qui doivent être fermées en mode d'utilisation normal avec le conducteur se trouvant sur la plate-forme de conducteur (12) et qui doivent être ouvertes en mode d'utilisation accompagné avec le conducteur se trouvant à l'extérieur de la plate-forme de conducteur (12), afin de pouvoir utiliser le chariot de manutention (10) dans le mode d'utilisation concerné.

10. Chariot de manutention selon la revendication 9, **caractérisé en ce que** le dispositif de commande est conçu d'une manière telle que le mode d'utilisation accompagné ne puisse être pratiqué qu'avec la plate-forme de conducteur (12) abaissée, de préférence à une hauteur de la plate-forme de conducteur inférieure ou égale à 200 mm.
